# EUROPEAN PATENT APPLICATION

(11) **EP 4 598 158 A1**
(43) Date of publication of application: **06.08.2025**
(21) Application number: 22960884.9
(22) Date of filing: 28.09.2022
(51) Int. Cl.: H04W 56/00, H04W 72/0457

(54) **TERMINAL, WIRELESS COMMUNICATION METHOD, AND BASE STATION**

(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/036306
(87) International publication number: WO 2024/069822

(57) **Abstract**

A terminal according to an aspect of the present disclosure includes a transmitting section that transmits a UL time synchronization request related to a transmission/reception point (TRP) by using a specific uplink (UL) signal, based on at least one of a synchronization status per the TRP and time alignment establishment per the TRP, and a control section that determines that a plurality of TRPs are synchronized after a specific period of time elapses after transmitting the UL signal. According to an aspect of the present disclosure, even when communication is performed by using a plurality of transmission points, the communication can be appropriately performed.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of the LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is assumed that, in future radio communication systems (for example, radio communication systems of Rel. 17/5G or later), communication is controlled using a plurality of transmission/reception points (for example, multi-TRP (MTRP)) in a serving cell, or communication is controlled based on mobility between a plurality of cells including a non-serving cell (inter-cell mobility).

However, in a case where a terminal (user terminal, User Equipment (UE)) performs UL transmission to a plurality of transmission/reception points, how to control the UL transmission (for example, control of timing advance and the like) is a problem. Unless UL transmission to each transmission/reception point is appropriately controlled, quality of communication using a plurality of transmission/reception points may degrade.

The present disclosure has been made in view of this respect, and an object of the present disclosure is to provide a terminal, a radio communication method, and a base station capable of appropriately perform communication even in a case of the communication using a plurality of transmission/reception points. Solution to Problem

A terminal according to an aspect of the present disclosure includes a transmitting section that transmits a UL time synchronization request related to a transmission/reception point (TRP) by using a specific uplink (UL) signal, based on at least one of a synchronization status per the TRP and time alignment establishment per the TRP, and a control section that determines that a plurality of TRPs are synchronized after a specific period of time elapses after transmitting the UL signal.

### Advantageous Effects of Invention

According to an aspect of the present disclosure, even when communication is performed by using a plurality of transmission points, the communication can be appropriately performed.

### Brief Description of Drawings

[FIG. 1] FIGS. 1A to 1D are diagrams to show examples of multi-TRP.
[FIG. 2] FIGS. 2A and 2B are diagrams to show examples of inter-cell mobility.
[FIG. 3] FIG. 3 is a diagram to show examples of switching between a serving cell and an additional cell by L1/L2 signaling.
[FIG. 4] FIG. 4 is a diagram to show an example of configuration examples 1 to 3 when candidate cells are supported.
[FIG. 5] FIGS. 5A to 5C are diagrams to show examples of a case where switching between candidate cells/candidate cell groups by L1/L2 signaling is performed in the configuration examples 1 to 3, respectively, when the candidate cells are supported.
[FIG. 6] FIG. 6 is a diagram to show an example of timing advance groups (TAGs) to which cells included in a cell group belong.
[FIG. 7] FIG. 7 is a diagram to show an example of a MAC CE for timing advance command.
[FIG. 8] FIG. 8 is a diagram to show an example of an RRC information element in accordance with option 1-2.
[FIG. 9] FIG. 9 is a diagram to show another example of the RRC information element in accordance with option 1-2.
[FIG. 10] FIG. 10 is a diagram to show an example of an RRC information element in accordance with option 1-3.
[FIG. 11] FIG. 11 is a diagram to show an example of a RACH prioritization operation in accordance with option 2-2.
[FIG. 12] FIG. 12 is a diagram to show an example of a UL time synchronization request according to a third embodiment.
[FIG. 13] FIG. 13 is a diagram to show an example of a RACH prioritization operation in accordance with option 7-2.
[FIG. 14] FIG. 14 is a diagram to show an example of a schematic structure of a radio communication system according to one embodiment.
[FIG. 15] FIG. 15 is a diagram to show an example of a structure of a base station according to one embodiment.
[FIG. 16] FIG. 16 is a diagram to show an example of a structure of a user terminal according to one embodiment.
[FIG. 17] FIG. 17 is a diagram to show an example of a hardware structure of the base station and the user terminal according to one embodiment.
[FIG. 18] FIG. 18 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel have a QCL relationship, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case where the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Multi-TRP)

For NR, it is studied that one or more transmission/reception points (TRPs) (multi-TRP (MTRP)) perform DL transmission to a UE using one or more panels (multi-panel). It is also studied that the UE performs UL transmission to the one or plurality of TRPs.

Note that a plurality of TRPs may correspond to the same cell identifier (ID) or different cell IDs. The cell ID may be a physical cell ID (for example, PCI) or a virtual cell ID.

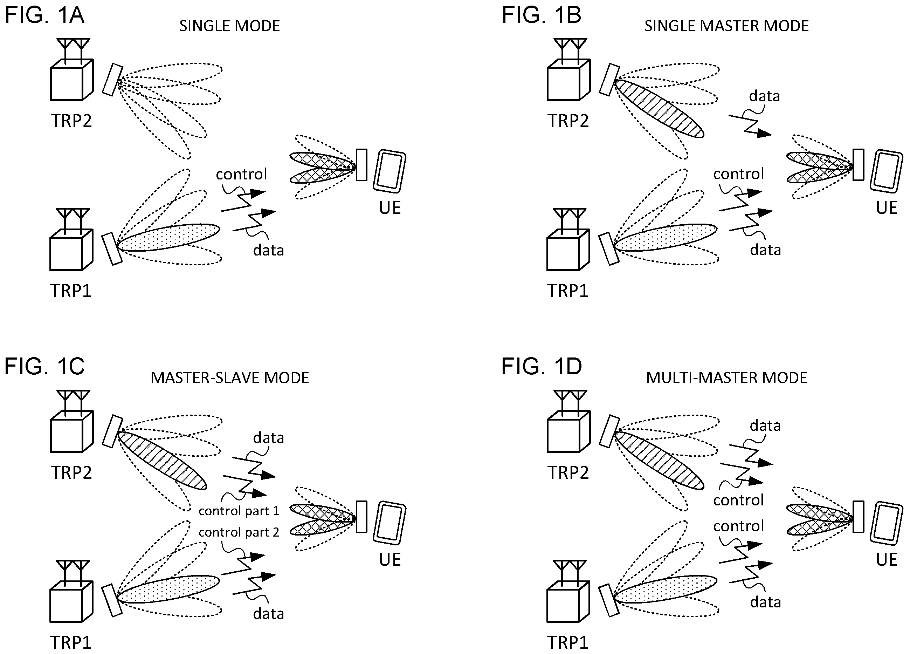

FIGS. 1A to 1D are diagrams to show examples of a multi-TRP scenario. In these examples, each TRP is assumed to be able to transmit four different beams, without limitation.

FIG. 1A shows an example of a case where only one TRP (a TRP 1 in the present example) of the multi-TRP performs transmission to the UE (which may be referred to as a single mode, a single TRP, or the like). In this case, the TRP 1 transmits both a control signal (PDCCH) and a data signal (PDSCH) to the UE.

In the present disclosure, a single TRP mode may mean a mode in a case where the multi-TRP (mode) is not configured.

FIG. 1B shows an example of a case where only one TRP (the TRP 1 in the present example) of the multi-TRP transmit a control signal to the UE, and the multi-TRP transmit data signals (also, referred to as a single master mode). The UE receives PDSCHs transmitted from the multi-TRP based on one piece of downlink control information (DCI).

FIG. 1C shows an example of a case where each TRP of the multi-TRP transmits a part of a control signal the UE, and the multi-TRP transmit data signals (which may be referred to as a master slave mode). The TRP 1 may transmit a part 1 of a control signal (DCI), and the TRP 2 may transmit a part 2 of a control signal (DCI). The part 2 of the control signal may depend on the part 1. The UE receives the PDSCHs transmitted from the multi-TRP based on the parts of these pieces of DCI.

FIG. 1D shows an example of a case where respective TRPs of the multi-TRP transmit separate control signals to the UE, the multi-TRP transmit data signals (which may be referred to as a multi-master mode). The TRP 1 may transmit a first control signal (DCI), and the TRP 2 may transmit a second control signal (DCI). The UE receives the PDSCHs transmitted from the multi-TRP based on these pieces of DCI.

In a case where a plurality of PDSCHs (which may be referred to as multi-PDSCH (multiple PDSCHs)) from the multi-TRP as shown in FIG. 1B are scheduled by using one piece of DCI, the DCI may be referred to as single DCI (S-DCI, single PDCCH)). In a case where a plurality of PDSCHs from the multi-TRP as shown in FIG. 1D are scheduled by using a plurality pieces of DCI, these pieces of DCI may be referred to as multi-DCI (M-DCI, multi-PDCCH (multiple PDCCHs)).

The respective TRPs of the multi-TRP may transmit different transport blocks (TBs)/codewords (Code Words (CWs))/different layers. Alternatively, the respective TRPs of the multi-TRP may transmit the same TB/CW/layer.

As one mode of multi-TRP transmission, non-coherent joint transmission (NCJT) is under study. In the NCJT, for example, the TRP 1 performs modulation mapping on a first codeword, performs layer mapping, and transmits a first number of layers (for example, two layers) a first PDSCH using a first precoding. The TRP 2 performs modulation mapping on a second codeword, performs layer mapping, and transmits a second number of layers (for example, two layers) a second PDSCH using a second precoding.

Note that it may be defined that a plurality of PDSCHs (multi-PDSCH) subjected to NCJT partially or completely overlap with respect to at least one of time and frequency domains. In other words, a first PDSCH from a first TRP and a second PDSCH from a second TRP may overlap in terms of at least one of time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

In the URLLC to the multi-TRP, support of PDSCH (transport block (TB) or codeword (CW)) repetition across the multi-TRP is under study. Support of a repetition scheme (URLLC scheme, for example, a scheme 1, 2a, 2b, 3, or 4) across the multi-TRP on the frequency domain or a layer (spatial) domain or the time domain is under study. In the scheme 1, the multi-PDSCH from the multi-TRP are subjected to space division multiplexing (SDM). In the schemes 2a and 2b, the PDSCH from the multi-TRP is subjected to frequency division multiplexing (FDM). In the scheme 2a, the same redundancy version (RV) is applied to the multi-TRP. In the scheme 2b, the same RV or different RVs may be applied to the multi-TRP. In the schemes 3 and 4, the multi-PDSCH from the multi-TRP are subjected to time division multiplexing (TDM). In the scheme 3, the multi-PDSCH from the multi-TRP are transmitted in one slot. In the scheme 4, the multi-PDSCH from the multi-TRP are transmitted in different slots.

According to such a multi-TRP scenario, more flexible transmission control using a high quality channel is possible.

The NCJT using the multi-TRP/panel may possibly use a high rank. In order to support ideal and non-ideal backhauls between a plurality of TRPs, both the single DCI (single PDCCH, for example, FIG. 1B) and the multi-DCI (multi-PDCCH, for example, FIG. 1D) may be supported. The maximum number of TRPs may be two for both the single DCI and the multi-DCI.

TCI enhancement for single PDCCH design (mainly for the ideal backhaul) is under study. Each TCI codepoint in the DCI may correspond to one or two TCI states. A TCI field size may be the same as that in Rel. 15.

For the PDCCH/CORESET defined in Rel. 15, one TCI state without a CORESET pool index (CORESETPoolIndex) (which may be referred to as TRP information (TRP Info)) is configured for one CORESET.

For the PDCCH/CORESET enhancement defined in Rel. 16, a CORESET pool index is configured for each CORESET in the multi-TRP based on the multi-DCI.

### (Inter-cell Mobility)

For NR, it is studied that one or a plurality of transmission/reception points (TRPs) (multi-TRP (MTRP)) perform DL transmission to a UE. It is also studied that the UE performs UL transmission to the one or plurality of TRPs.

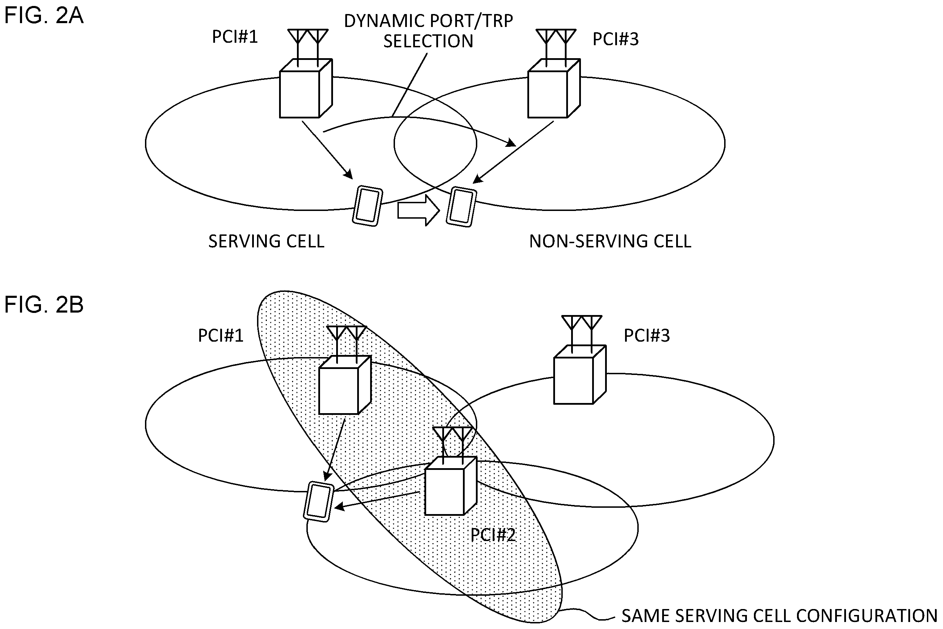

It is considered that a UE receives channels/signals from a plurality of cells/TRPs in inter-cell mobility (for example, L1/L2 inter cell mobility) (see FIGS. 2A and 2B).

FIG. 2A shows an example of inter-cell mobility with cells including a non-serving cell (for example, Single-TRP inter-cell mobility). A UE may be configured with one TRP (or a single TRP) in each cell. Here, shown is a case where the UE receives channels/signals from a base station/TRP of cell #1 being a serving cell, and a base station/TRP of cell #3 being not a serving cell (non-serving cell). For example, this corresponds to a case where the UE switches from cell #1 to cell #3 (for example, fast cell switch). A TRP of the serving cell may be referred to as a primary TRP (for example, pTRP). A TRP of the non-serving cell may be referred to as an additional TRP (aTRP).

In this case, selection of a port (for example, an antenna port)/TRP may be performed dynamically. The selection of a port (for example, an antenna port)/TRP or may be performed based on a TCI state indicated or updated by DCI/MAC CE. Here, shown is a case of supporting configuration of different physical cell IDs (for example, PCIs) for cell #1 and cell #3.

FIG. 2B shows an example of the multi-TRP scenario (for example, inter-cell mobility in a case of using the multi-TRP (Multi-TRP inter-cell mobility)). A UE may be configured with a plurality of (for example, two) TRPs (or different CORESET pool indices) in each cell. Here, shown is a case where the UE receives channels/signals from TRP #1 and TRP 2. Here, also shown is a case where TRP #1 corresponds to physical cell ID (PCI) #1 and TRP #2 corresponds to PCI #2.

The multi-TRP (for example, TRPs #1 and #2) may be connected via ideal/non-ideal backhaul to exchange information, data, and the like. Each TRP of the multi-TRP may transmit the same or a different codeword (Code Word (CW)) and the same or a different layer. As one mode of multi-TRP transmission, non-coherent joint transmission (NCJT) may be employed as shown in FIG. 2B. Here, shown is a case where NCJT is performed between TRPs corresponding to different PCIs. Note that the same serving cell configuration may be applied/configured for TRP #1 and TRP #2.

It may be defined that a plurality of PDSCHs (multi-PDSCH) subjected to NCJT partially or completely overlap with respect to at least one of time and frequency domains. In other words, a first PDSCH from TRP #1 and a second PDSCH from TRP #2 may overlap in terms of at least one of time and frequency resources. The first PDSCH and the second PDSCH may be used for transmission of the same TB or may be used for transmission of different TBs.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI (S-DCI, single PDCCH)) (single-master mode). The one piece of DCI may be transmitted from one TRP of the multi-TRP. A structure using one piece of DCI in multi-TRP may be referred to as single-DCI based multi-TRP (mTRP/MTRP).

The plurality of PDSCHs from the multi-TRP may be scheduled by using a plurality of respective pieces of DCI (multi-DCI (M-DCI), multi-PDCCH (multiple PDCCHs)). The plurality of pieces of DCI may be transmitted from respective TRPs of the multi-TRP. A structure using a plurality of pieces of DCI in multi-TRP may be referred to as multi-DCI based multi-TRP (mTRP/MTRP).

The UE may assume to transmit, to the different TRPs, separate CSI reports related to the respective TRPs. Such CSI feedback may be referred to as separate feedback, separate CSI feedback, and the like. In the present disclosure, "separate" may be interchangeably interpreted as "independent."

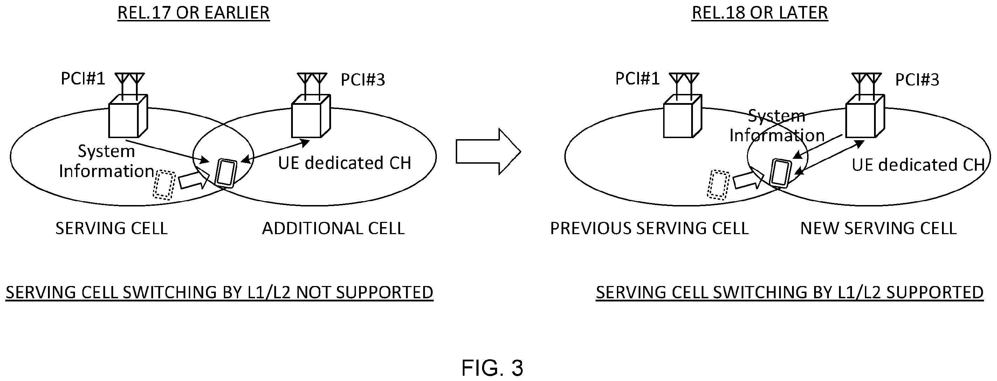

In Rel-17 NR, it is assumed that beam indication to TCI states associated with different PCIs by a MAC CE/DCI is supported. Meanwhile, in Rel-18 NR or later versions, it is assumed that serving cell switching (for example, indication of change of a serving cell to a cell having a different PCI) by L1/L2 signaling (for example, DCI/MAC CE) is supported (see FIG. 3).

FIG. 3 shows a case where UE performs cell switching from the serving cell to an additional cell (or also referred to as a candidate cell or a target cell).

### (Candidate Cell)

It is also assumed that, in inter-cell mobility, one or a plurality of candidate cells are configured/managed for each serving cell.

For example, one or more candidate cells with information being restricted (for example, a UE is notified only of one or some of parameters) may be configured in a certain higher layer parameter (for example, ServingCellConfig) (Alt. 1). This may be configured similarly to inter-cell beam management (inter-cell BM) for existing systems (for example, Rel. 17).

Alternatively, a complete configuration (for example, ServingCellConfig) of one or more candidate cells may be configured, and the candidate cell(s) may be associated with each serving cell (Alt. 2). For example, a framework for carrier aggregation configuration (for example, CA configuration framework) or a framework for CHO (Conditional Handover) /CPC (Conditional PSCell Change) configuration may be reused.

In Alt. 1/2, activation/deactivation of a candidate cell(s) may be controlled by a MAC CE/DCI.

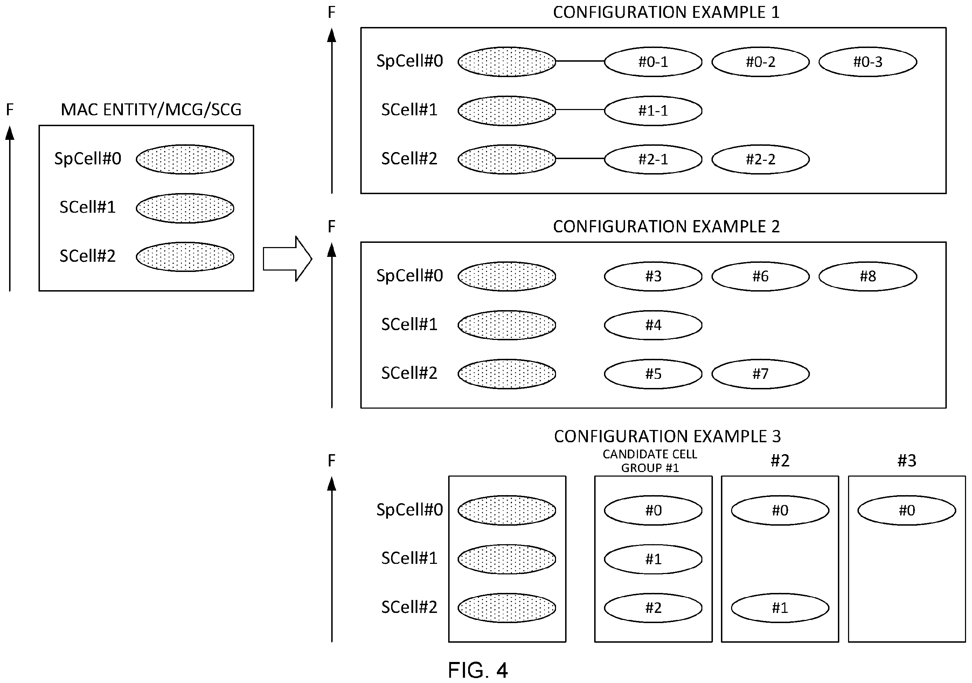

As configuration of candidate cells, at least one of configuration examples 1 to 3 below may be used (see FIG. 4). Here, shown are examples of configuration/association of candidate cells (or additional cells) for serving cells/cell group when SpCell #0, SCell #1, and SCell #2 are configured as the serving cells. Configuration examples 1 to 3 below are examples, and the number of cells, association for each cell, and the like are not limited to these and may be changed appropriately. Alternatively, another configuration example(s) may be supported/employed in addition to/instead of the configuration examples 1 to 3.

Configuration example 1 shows a case where one or more candidate cells are associated with/configured for each serving cell (see FIG. 4). Specifically, shown is a case where candidate cells #0-1, #0-2, and #0-3 are associated with SpCell #0, candidate cell #1-1 is associated with SCell #1, and candidate cells #2-1 and #2-2 are associated with SCell #2. Information related to this association may be configured for/indicated to a UE by a base station by RRC/MAC CE/DCI.

Configuration example 2 shows a case where candidate cells are associated with/configured for a MAC entity/MCG/SCG (see FIG. 4). Specifically, shown is a case where candidate cells #3 to #8 are associated with the MAC entity/MCG/SCG. In this case, instead of a candidate cell(s) being associated with each serving cell, the candidate cells are configured for the MAC entity or cell group (for example, an MCG/SCG). Information related to a candidate cell(s) to be configured for each cell may be configured for/indicated to a UE by a base station by RRC/MAC CE/DCI.

In the configuration example 3, one or more candidate cell groups may be configured (see FIG. 4). Specifically, shown is a case where candidate cell group #1 including candidate cells #0 to #2, candidate cell group #2 including candidate cells #0 and #1, and candidate cell group #3 including candidate cell #0 are configured. Each candidate cell group includes one or more candidate cells. Each candidate cell included in the candidate cell group may be associated with at least one serving cell. Information related to the candidate cell(s) may be configured for/indicated to a UE by a base station by RRC/MAC CE/DCI.

In existing systems (for example, Rel. 17), L1 beam indication for a TCI state related to an additional PCI (or an additional cell) (for example, indication by a TCI state field of DCI) is supported.

It is assumed, in Rel. 18 or later versions, that a new L1/L2 signal (for example, DCI/MAC CE) indicating switching of a serving cell (for example, serving cell switch) is supported. It is assumed that, as the indication, at least one of implicit indication and explicit indication is supported. The implicit indication may mean that a certain CORESET is updated to a TCI state associated with an additional PCI by a MAC CE, for example. The explicit indication may mean that cell switching is directly indicated by DCI/MAC CE.

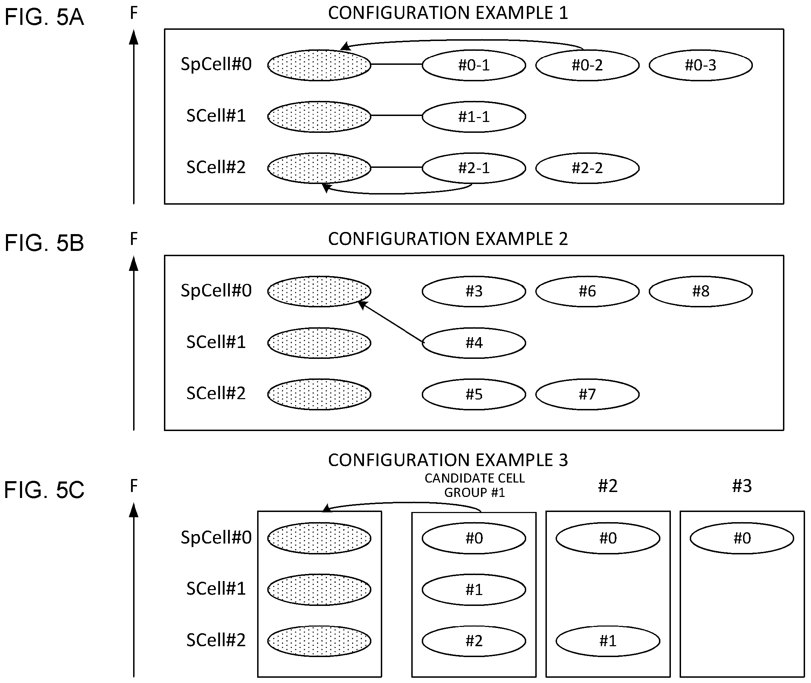

For example, in configuration example 1 of candidate cells, a certain candidate cell may be specified as a serving cell (or indicated for switching with a serving cell) via L1/L2 signaling. FIG. 5A shows a case where candidate cell #0-2 turns to be an SpCell of the MCG/SCG (SpCell #0 and candidate cell #0-2 are switched) by L1/L2 signaling. Also shown is a case where candidate cell #2-1 turns to be an SCell of an MCG/SCG (SCell #2 and candidate cell #2-1 are switched) by L1/L2 signaling.

Alternatively, in configuration example 2 of candidate cells, a certain candidate cell may be specified as a serving cell (or indicated for switching with a serving cell) via L1/L2 signaling. FIG. 5B shows a case where candidate cell #4 turns to be an SpCell of an MCG/SCG (SpCell #0 and candidate cell #4 are switched) by L1/L2 signaling.

Alternatively, in configuration example 3 of candidate cells, a certain candidate cell group (or one or more candidate cells included in the certain candidate cell group) may be changed/updated to a serving cell group via L1/L2 signaling. FIG. 5C shows a case where candidate cell group #1 (or candidate cells #0 to #2 included in candidate cell group #1) turns to be a serving cell group (or the serving cell group and candidate cell group #1 are switched) by L1/L2 signaling.

### (Timing Advance Group)

When a plurality of TRPs are used, there are some cases where the distance between a UE and each TRP is different. The plurality of TRPs may be included in the same cell (for example, a serving cell). Alternatively, among the plurality of TRPs, a certain TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG. A timing advance group including an SpCell of a MAC entity may be referred to as a primary timing advance group (PTAG), and a TAG other than the PTAG may be referred to as a secondary timing advance group (STAG).

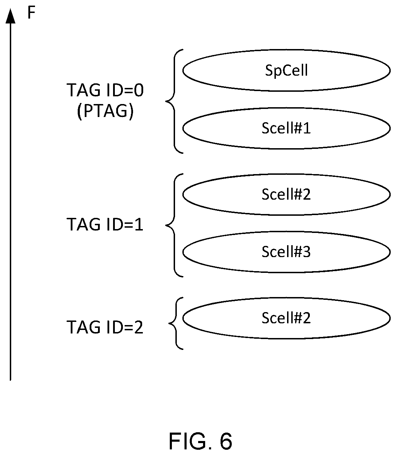

In existing systems (for example, Rel-16 NR), configuration of four TAGs at maximum (for example, MCG/SCG) is supported for each cell group (see FIG. 6). FIG. 6 shows a case where three TAGs are configured for a cell group including an SpCell and SCells #1 to #4. Here, shown is a case where the SpCell and SCell #1 belong to a first TAG (PTAG or TAG #0), SCell #2 and SCell #3 belong to a second TAG (TAG #1), and SCell #4 belongs to a third TAG (TAG #2).

A UE may be notified of a timing advance command (TA command) by using a MAC control element (for example, a MAC CE). The TA command is a command that indicates an uplink channel transmission timing value and is included in the MAC control element. The TA command is signaled from a radio base station to the UE on a MAC layer. The UE controls a certain timer (for example, a TA timer), based on reception of the TA command.

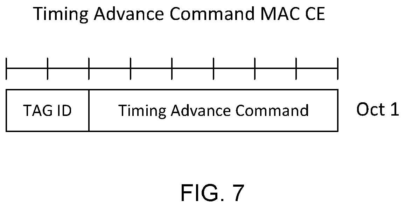

A timing advance command MAC CE (TAC MAC CE) may have a structure including a field for timing advance group index (for example, TAG ID) and a field for timing advance command (see FIG. 7).

On the other hand, a case is assumed that, in future radio communication systems, a different TAG (or TAG-ID) is configured for each of one or more TRPs corresponding to a certain cell (or CC). Alternatively, a case is assumed that different TRPs corresponding to a certain cell share a common TAG. Alternatively, assumed is a case where the TA command MAC CE is applied to only one TRP, or a case where the TA command MAC CE is applied to a plurality of TRPs.

Alternatively, assumed is a case where different TRPs respectively corresponding to different cells use different TAGs/share a common TAG. For example, it is also assumed that the UL transmission is controlled based on common timing advance/different timing advances for a serving cell (or a TRP of the serving cell) and a non-serving cell (or a TRP of the non-serving cell) in inter-cell mobility.

As described above, in Rel-18 MIMO or later versions, two timing advances (TAs) for two TRPs are also assumed to be supported in the multi-TRP operation using the multi-DCI.

In a case where the TAG is configured/controlled in units of TRP, time alignment timer (for example, timeAlignmentTimer) may be configured per TRP. The time alignment timer may control a time that the MAC entity considers the serving cell belonging to the associated TAG to be uplink time aligned. For example, in order to maintain (for example, perform maintenance of) UL time alignment, the time alignment timer may be configured by the RRC.

The time alignment timer (for example, timeAlignementTimer) may be maintained for the UL time alignment. In Rel. 17, the time alignment timer (for example, timeAlignementTimer) correspond for each TAG. When the UE has received a MAC CE for timing advance command (for example, a TAC MAC CE), the UE starts or restarts a time alignment timer related to each indicated timing advance group (for example, TAG).

When a MAC entity receives the TAC MAC CE, and a certain value (N_{TA}) is maintained for the indicated TAG, the MAC entity uses the timing advance command for the indicated TAG or starts or restarts the time alignment timer related to the indicated TAG. The certain value (N_{TA}) may be timing advance between DL and UL.

Operation when the time alignment timer expires may be defined separately for a PTAG and an STAG. Note that a timing advance group (TAG) including an SpCell of a MAC entity may be referred to as a primary timing advance group (PTAG), and a TAG other than the PTAG may be referred to as a secondary timing advance group (STAG).

For example, in Rel. 17, certain operation for PTAG is employed when a timing advance timer corresponding to a PTAG expires, and certain operation for STAG may be employed when a timing advance timer for STAG expires.

For example, when such a time alignment timer expires, the following operation (for example, the certain operation for PTAG/certain operation for STAG) may be performed.

### {Certain Operation for PTAG}

In a case where the time alignment timer is associated with a PTAG,
- flush (discard) all the HARQ buffers of all serving cells.
- notify RRC of release of a PUCCH, if configured, for all the serving cells.
- notify RRC of release of an SRS, if configured.
- clear all configured DL assignments and configured UL assignments.
- clear a PUSCH resource for semi-persistent CSI reporting.
- cause all running time alignment timers to expire.
- maintain N_{TA} of all TAGs.

### [Certain Operation for STAG]

In a case where the time alignment timer is associated with an STAG, for all serving cells belonging to the TAG,
- flush (discard) all HARQ buffers.
- notify RRC of release of a PUCCH, if configured.
- notify RRC of release of an SRS, if configured.
- clear all configured DL assignments and UL assignments.
- clear a PUSCH resource for semi-persistent CSI reporting.
- maintain N_{TA} of the TAG.

### (Controlling TA in units of TRP/Panel)

As described above, in the case of performing communication using a plurality of transmission/reception points (for example, TRPs)/panels, the timing advance (TA) is also assumed to be controlled per TRP/per panel.

In Rel-18 NR or later versions, a contention based random access (CBRA) and contention free random access (CFRA) may be considered/determined in units of TRP or in units of TRP TA (TA per TRP) for a RACH triggered by a PDCCH order and a RACH triggered by the UE.

In a case where timing advance application/configuration is supported per TRP (or in units of TRP), the UE controls UL transmission on each TRP based on a timing advance corresponding to each TRP (or a timing advance group to which each TRP belongs).

Information related to a TRP corresponding to each serving cell (for example, TRP index/TRP ID) may be configured for/indicated to the UE from the base station by using the RRC/MAC CE/downlink control information. The UE may receive association information related to the timing advance corresponding to each TRP (for example, information related to TA value/timing advance command/time alignment timer or the like) from the base station.

Embodiments according to the present disclosure may be applied to at least one of the intra-cell multi-TRP (intra-cell M-TRP) and the inter-cell multi-TRP (inter-cell M-TRP).

In the intra-cell multi-TRP, a plurality of TRPs (or activated TCI states of a plurality of TRPs) may be associated with the same cell ID. The cell ID may be a physical cell ID (PCI).

In the inter-cell multi-TRP, a plurality of TRPs (or activated TCI states of a plurality of TRPs) may be associated with different cell IDs (for example, PCIs). For example, in the inter-cell multi-TRP, two TRPs may be interpreted as two TRPs respectively associated with two PCIs.

In the case where timing advance application/configuration is supported per TRP (or in units of TRP), the respective TRPs may belong to different TAGs. A plurality of TRPs (for example, two TRPs) of the serving cell may respectively belong to two TAGs. The TAG may include a plurality of TRPs from a plurality of serving cells. All TRPs/serving cells in the TAG apply/maintain the same timing advance (TA)/same time alignment timer.

In the present disclosure, the TAG may include one or more sub-TAGs. For example, two TRPs of the serving cell may respectively belong to two sub-TAGs and may be belong to one TAG. The sub-TAG may include a plurality of TRPs from a plurality of serving cells. All TRPs/serving cells in the sub-TAG apply/maintain the same timing advance (TA)/same time alignment timer.

For example, each TA may be applied per TRP (or indication may be made in units of TRP TA). For example, at least one of the following options may be applied.

### [Option 1]

The TAG-ID different per TRP may be configured, and a TA command MAC CE different per TRP may be configured. Each TAG may maintain a time alignment timer for UL time alignment.

### [Option 2]

Different TRPs may share a TAG. The TA command MAC CE may be applied to only one TRP. The UE applies to a different TA to another TRP. For example, the UE may adjust a TA value for another TRP (for example, TRP #1) by use of a TA offset (TA_TRP_offset) based on a TA for TRP #0 TA (TA_TRP #0).

In this case, only one time alignment timer may be for the UL time alignment of a plurality of TRPs. This may mean that the UL time alignment of a plurality of TRPs are simultaneously maintained or lost.

### [Option 3]

The number of TAGs may be one. The TA command MAC CE may be applied to a plurality of serving TRPs for the UE.

### [Option 4]

The number of TAGs may be one. The TA command MAC CE received on the TRP/CW/PDSCH/DMRS port group may be applied to the same TRP/CW/PDSCH/DMRS port group of the TAG. Each TRP/CW/PDSCH/DMRS port group of the TAG maintains the time alignment timer for UL time alignment.

As described above, in Rel. 18 or later versions, in the multi-TRP (for example, the multi-TRP using the multi-DCI), a plurality of timing advances are also assumed to be supported. For example, a plurality of (for example, two) timing advances may be support for the multi-TRP (for example, two TRPs) using the multi-DCI. The applying of a plurality of timing advances to the multi-TRP may be supported in an intra-cell/inter-cell multi-DCI multi-TRP scenario, or may be supported in a plurality of frequency ranges (for example, FR1 and FR2).

Incidentally, in the RACH procedure per TRP (or TRP TA) on the multi-TRP as described above, some cases have remained insufficiently studied.

For example, for the CFRA, RACH resource configuration/determination method per TRP have not been sufficiently studied.

For the existing RACH procedure, there is one ongoing RACH procedure at any time point in a MAC entity. In a case where a plurality of (for example, two) RACH procedures are triggered for the UE, how to handle those depends on UE implementation. Specifically, an operation has not been sufficiently studied in a case where a plurality of (for example, two) RACH procedures are triggered for a plurality of (for example, two) TRPs.

In a case where the UE wants to establish time alignment of one TRP of a cell, or the UE determines that one TRP of a cell is "non-synchronized", it is considered that the UE triggers the RACH procedure to the one TRP.

In consideration that another TRP of the cell is synchronized, it is considered that the UE requests TRP synchronization to the other TRP via another UL signal (for example, a scheduling request (SR)/MAC CE).

However, an operation for the request related to the TRP synchronization has not been sufficiently studied.

In a case where timing advance application/configuration in units of TRP is supported, how to control application of a timing advance command indicated by a certain MAC CE (for example, MAC RAR) has not been sufficiently studied.

For a plurality of (for example, two) TRPs for one cell belonging to a plurality of (for example, two) TAGs, it is considered that the operation in the existing system is required to be enhanced, which has not been sufficiently studied.

In the inter-cell mobility, study for introducing the RACH procedure per TRP has not been sufficient.

In a case where the above-described studies are insufficient, quality of communication using a plurality of TRPs may be deteriorated and improvement of communication throughput may be suppressed.

Thus, the inventors of the present invention came up with the idea of a method for solving the above-described problems.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support, " "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the present disclosure, TRP, CORESET pool index (CORESETPoolIndex), TRP ID, ID for TRP, TAG ID, TCI state group, spatial relation group, QCL source RS group, DL RS group, path loss RS group, and (inter-cell multi-TRP) PCI may be interchangeably interpreted.

In the present disclosure, associated with different TRP, associated with different CORESET pool index (CORESETPoolIndex), associated with different TRP ID, associated with different ID for TRP, associated with different TAG ID, associated with different TCI state group, associated with different spatial relation group, associated with different QCL source RS group, associated with different DL RS group, associated with different path loss RS group, and associated with different (inter-cell multi-TRP) PCI may be interchangeably interpreted.

Embodiments according to the present disclosure may be applied to at least one of the intra-cell multi-TRP and the inter-cell multi-TRP.

In the present disclosure, the intra-cell multi-TRP may means that activated TCI states of a plurality of (for example, two) TRPs are associated with the same PCI.

In the present disclosure, the inter-cell multi-TRP may means that activated TCI states of a plurality of (for example, two) TRPs are associated with different PCIs.

In the present disclosure, in a case of the inter-cell multi-TRP, a plurality of (for example, two) TRPs may mean a plurality of (for example, two) TRPs associated with a plurality of (for example, two) PCIs.

### (Radio Communication Method)

### <First Embodiment>

For the CFRA, the RACH resource configuration/determination method per TRP have not been sufficiently studied.

In the existing systems (until Rel. 17), a CFRA resource is provided in a RACH configuration (rach-ConfigDedicated).

In a case where the CFRA resources associated with SSBs are explicitly provided in a RACH configuration (rach-ConfigDedicated), and at least one SSB with an SSB RSRP (SS-RSRP) above a specific threshold (rsrp-ThresholdSSB) among the associated SSBs is available, the UE selects one SSB with the SS-RSRP above the specific threshold (rsrp-ThresholdSSB).

Then, the UE configures a random access preamble index (ra-PreambleIndex) corresponding to the selected SSB.

In a case where the CFRA resources associated with CSI-RSs are explicitly provided in a RACH configuration (rach-ConfigDedicated), and at least one CSI-RS with a CSI-RS RSRP (CSI-RSRP) above a specific threshold (rsrp-ThresholdCSI-RS) among the associated CSI-RSs is available, the UE selects one CSI-RS with the CSI-RSRP above the specific threshold (rsrp-ThresholdCSI-RS).

Then, the UE configures a random access preamble index (ra-PreambleIndex) corresponding to the selected CSI-RS.

The first embodiment below describes the RACH resource configuration/determination method per TRP.

The UE may receive information related to the RACH resource corresponding to each TRP. Then, the UE may control the RACH procedure on each TRP based on the information.

The UE may may determine one or more RACH resources in accordance with a specific rule/condition.

The RACH resource may be a RACH resource in a CFRA per TRP. In the present disclosure, a RACH resource in a CFRA may be referred to as a CFRA resource.

The specific rule/condition may be at least one of options 1-1 to 1-3 below.

### <<Option 1-1>>

The UE may be configured with one (common) set of (parameters for) CFRA resources in a RACH configuration (for example, rach-ConfigDedicated).

The one (common) set may include at least one of, for example, a parameter indicating an SSB resource list (for example, ssb-ResourceList), a parameter indicating a PRACH mask index for random access (RA) resource selection (for example, ra-ssb-OccasionMaskIndex), a parameter indicating a CSI-RS resource list (for example, csi-rs-ResourceList), and a parameter indicating a threshold for CSI-RS (for example, rsrp-ThresholdCSI-RS).

Each of the indexes for TRP may be associated with at least one of the SSB, the CSI-RS, the random access preamble index (for example, ra-PreambleIndex), and a PRACH occasion.

### [Option 1-1-1]

For a CFRA triggered by a PDCCH (or PDCCH order), the index for TRP may be indicated by the PDCCH. Alternatively, the index for TRP may be PDCCH CORESET/TCI state.

The RA resource may be determined based on the SSB/CSI-RS/ra-PreambleIndex/PRACH occasion associated with the indexes for TRP (or may be selected from among the SSB/CSI-RS/ra-PreambleIndex/PRACH occasion). The index for TRP may be indicated by a PDCCH, or an index for TRP associated with a PDCCH.

The rule in the existing systems (for example, before Rel. 17) may apply to a method for selecting a random access resource from among the SSB/CSI-RS/ra-PreambleIndex/PRACH occasion.

### [Option 1-1-2]

For a CFRA triggered by a specific event/condition, a random access resource may be determined based on the SSB/CSI-RS/ra-PreambleIndex/PRACH occasion associated with a TRP (or may be selected from among the SSB/CSI-RS/ra-PreambleIndex/PRACH occasion).

The rule in the existing systems (for example, before Rel. 17) may apply to a method for selecting a random access resource from among the SSB/CSI-RS/ra-PreambleIndex/PRACH occasion.

### <<Option 1-2>>

The UE may be configured with a plurality of (for example, two) sets of (parameters for) CFRA resources for a plurality of (for example, two) TRPs in the RACH configuration (for example, rach-ConfigDedicated). In other words, a parameter for a CFRA resource for the first TRP and a parameter for a CFRA resource for the second TRP may be separately configured for the UE.

The set may include at least one of, for example, a parameter indicating an SSB resource list (for example, ssb-ResourceList), a parameter indicating a PRACH mask index for random access (RA) resource selection (for example, ra-ssb-OccasionMaskIndex), a parameter indicating a CSI-RS resource list (for example, csi-rs-ResourceList), and a parameter indicating a threshold for CSI-RS (for example, rsrp-ThresholdCSI-RS).

The UE may be configured with, per TRP, at least one of, for example, a parameter indicating an SSB resource list (for example, ssb-ResourceList), a parameter indicating a PRACH mask index for random access (RA) resource selection (for example, ra-ssb-OccasionMaskIndex), a parameter indicating a CSI-RS resource list (for example, csi-rs-ResourceList), and a parameter indicating a threshold for CSI-RS (for example, rsrp-ThresholdCSI-RS).

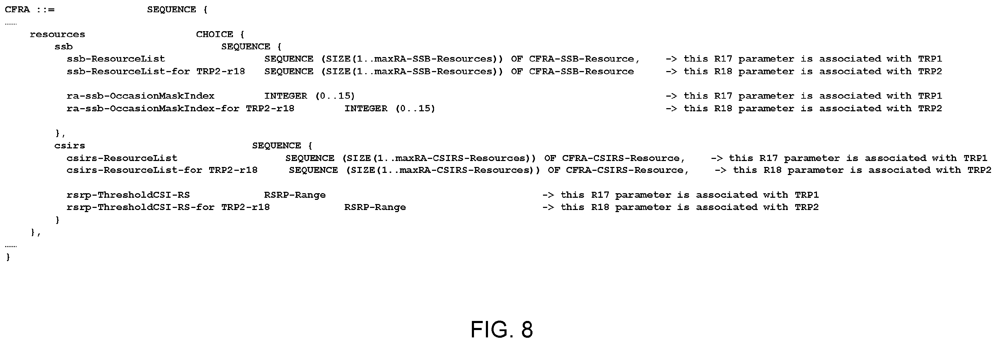

FIG. 8 is a diagram to show an example of an RRC information element in accordance with option 1-2. In the example shown in FIG. 8, the CFRA resources are configured separately for the first TRP and the second TRP. Note that FIG. 8 is described using a notation, Abstract Syntax Notation One (ASN.1) (as merely one example).

In the example shown in FIG. 8, the parameters included in the parameters for SSB (ssb) and the parameters for CSI-RS (csi-rs) in the parameters indicating the CFRA resource (resources) include parameters for the first TRP and parameters for the second TRP.

Specifically, FIG. 8 shows, as the parameters for the first TRP, ssb-ResourceList, ra-ssb-OccasionMaskIndex, csi-rs-ResourceList, and rsrp-ThresholdCSI-RS. FIG. 8 also shows, as the parameters for the second TRP, ssb-ResourceList-for TRP2-r18, ra-ssb-OccasionMaskIndex-for TRP2-r18, csi-rs-ResourceList-for TRP2-r18, and rsrp-ThresholdCSI-RS-for TRP2-r18.

The UE determines a CFRA resource for the first TRP based on the parameters for the first TRP and determines a CFRA resource for second TRP, based on the parameters for the second TRP.

Note that names of the parameters shown in FIG. 8 are merely examples, without limitation.

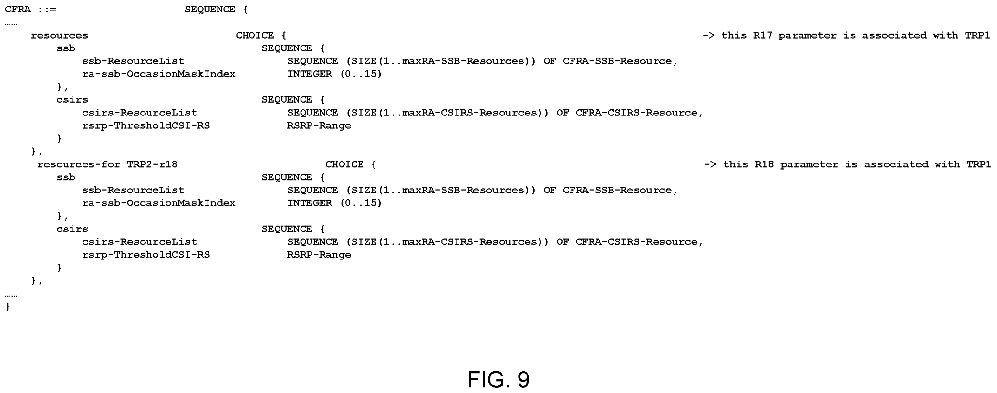

FIG. 9 is a diagram to show another example of the RRC information element in accordance with option 1-2. In the example shown in FIG. 9, the CFRA resources are configured separately for the first TRP and the second TRP similarly to FIG. 8. Note that FIG. 9 is described using a notation, Abstract Syntax Notation One (ASN.1) (as merely one example).

In the example shown in FIG. 9, for the parameters indicating the CFRA resource (resources), the parameters for first TRP and the parameters for second TRP are defined.

Specifically, FIG. 9 shows, as the parameters for the first TRP, resources, and as the parameters for the second TRP, resources-for TRP2-r18.

Note that names of the parameters shown in FIG. 9 are merely examples, without limitation.

The UE determines a CFRA resource for the first TRP based on the parameters for the first TRP and determines a CFRA resource for the second TRP, based on the parameters for the second TRP.

### <<Option 1-3>>

The UE may be configured with a plurality of sets of (parameters for) CFRA resources for a plurality of PCIs in the RACH configuration (for example, rach-ConfigDedicated).

A parameter for CFRA may be configured per PCI. The PCI may be, for example, at least one of a PCI of a serving cell and a PCI of a non-serving cell (additional PCI).

The parameter for CFRA may be any parameter included in the CFRA parameters in the RACH configuration (for example, rach-ConfigDedicated). The parameter for CFRA may include, for example, at least one (or all) of a parameter indicating an RA occasion for CFRA (for example, occasions), a parameter indicating a configuration of a random access occasion for CFRA (for example, rach-ConfigGeneric), a parameter indicating the number of SSBs per RACH occasion (for example, ssb-perRACH-Occasion), a parameter indicating a CFRA resource (for example, resources), a parameter indicating an SSB resource list (for example, ssb-ResourceList), a parameter indicating a PRACH mask index for RA resource selection (for example, ra-ssb-OccasionMaskIndex), a parameter indicating a CSI-RS resource list (for example, csi-rs-ResourceList), and a parameter indicating a threshold for CSI-RS (for example, rsrp-ThresholdCSI-RS).

Option 1-3 may apply to the inter-cell multi-TRP (inter-cell M-TRP). Option 1-3 may also apply to the mobility (defined in Rel. 18).

In the inter-cell multi-TRP (inter-cell M-TRP) (defined in Rel. 17), up to seven additional PCIs are configured, and the TCI states of different PCIs may be changed in the MAC CE. Thus, it is preferable that a configuration for a RACH for a plurality of (for example, all of) PCIs are made through RRC signaling.

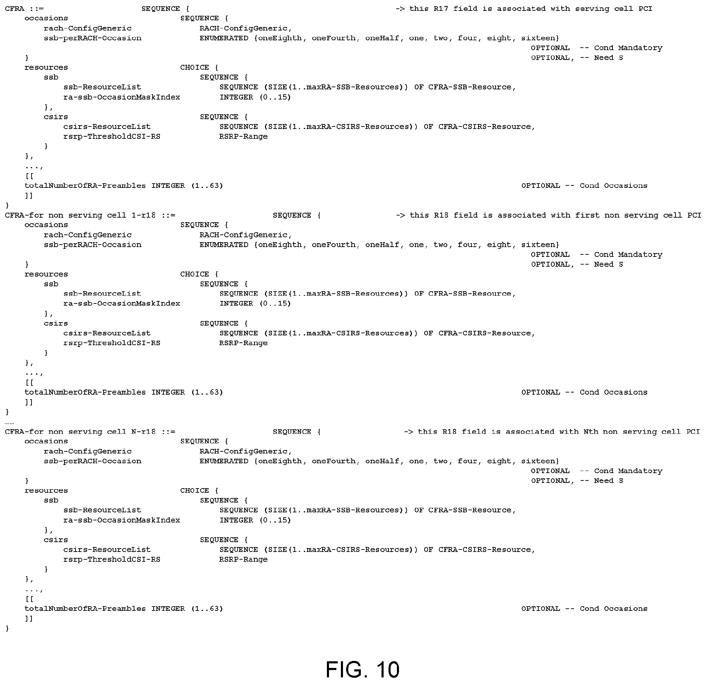

FIG. 10 is a diagram to show an example of an RRC information element in accordance with option 1-3. In the example shown in FIG. 10, the CFRA resources are configured separately per PCI. Note that FIG. 10 is described using a notation, Abstract Syntax Notation One (ASN.1) (as merely one example).

The example shown in FIG. 10 shows a parameter for CFRA corresponding to the PCI of the serving cell (CFRA), a parameter for CFRA corresponding to a PCI of a first non-serving cell (CFRA-for non serving cell 1-r18), and a parameter for CFRA corresponding to a PCI of a N-th (N is any integer) non-serving cell (CFRA-for non serving cell N-r18). These parameters may respectively include at least one (or all) of the parameters for CFRA describe above.

The UE may determine the CFRA resource based on the RACH configuration corresponding to the PCI.

Note that names of the parameters shown in FIG. 10 are merely examples, without limitation. Although FIG. 10 shows the parameter for CFRA corresponding to the PCI of the N-th (N is any integer) non-serving cell (CFRA-for non serving cell N-r18) as an example, parameters for CFRA corresponding to PCIs of second, third, ... non-serving cells may be defined.

In the first embodiment, the CFRA may be triggered for one TRP. The CFRA being triggered for one TRP may be at least one of, for example, one TRP of the serving cell being in a "non-synchronized (non-synchronized)" state, and (the CFRA) being triggered in order to establish time alignment for one TRP of the serving cell.

In a case where the CFRA is triggered for one TRP, the UE may select/determine a random access resource from among the SSB/CSI-RS/ra-PreambleIndex/PRACH occasion which are associated with the TRP and provided in the RACH configuration (for example, rach-ConfigDedicated).

In the present disclosure, the TRP being "non-synchronized" may mean that a time alignment timer associated with the TRP (for example, timeAlignmentTimer, or timeAlignmentTimer associated with a TAG to which the TRP belongs) expires.

As described above, the CFRA resource per TRP can be appropriately determined according to the first embodiment.

### <Second Embodiment>

For the existing RACH procedure, there is one ongoing RACH procedure at any time point in a MAC entity. In the case where a plurality of (for example, two) RACH procedures are triggered for the UE, how to handle those depends on UE implementation.

Specifically, an operation has not been sufficiently studied in a case where a plurality of (for example, two) RACH procedures are triggered for a plurality of (for example, two) TRPs.

The second embodiment below describes an operation (enhanced function) of the UE in a case where a plurality of RACH procedures are triggered.

In the MAC entity, while a (first) RACH procedure is ongoing, a new (second) RACH procedure may be triggered. The UE may receive a configuration of the new RACH procedure to be triggered. The first RACH procedure and the second RACH procedure may be respectively associated with different TRPs.

In the present disclosure, a plurality of (two) RACH procedures being respectively associated with different TRPs may mean at least one of the followings.
- PDCCH orders for a plurality of RACH procedures respectively indicate different TRPs.
- PDCCH orders for a plurality of RACH procedures are respectively associated with different TRPs.
- RACH resources for a plurality of RACH procedures (for example, SSB/CSI-RS/preamble index/PRACH occasion) are respectively associated with different TRPs.
- a plurality of RACH procedures are triggered by "non-synchronized (non-synchronized)" states of different TRPs.
- a plurality of RACH procedures are triggered in order to establish time alignments for different TRPs.

The UE may comply with at least one of options 2-1 and 2-2 below.

### <<Option 2-1>>

The UE may determine whether to continue the first RACH procedure or to initiate the second RACH procedure.

This determination may depend on the UE implementation. In this case, the UE may determine whether to continue the first RACH procedure or to initiate the second RACH procedure based on a specific rule/condition.

### <<Option 2-2>>

The UE may prioritize a RACH procedure associated with a specific TRP.

Option 2-2 is classified roughly into options 2-2-1 to 2-2-4.

### [Option 2-2-1]

The specific TRP may be, for example, a TRP having a specific TRP ID.

The specific TRP ID may be, for example, the lowest (or highest) TRP ID.

The specific TRP ID may be, for example, a TRP ID having a value of 0 (or 1).

### [Option 2-2-2]

The specific TRP may be, for example, a TRP associated with a specific PCI.

The specific PCI may be, for example, a PCI of the serving cell or any additional PCI.

### [Option 2-2-3]

The specific TRP may be, for example, a TRP associated with a specific TAG.

The specific TAG may be, for example, a PTAG or a STAG.

### [Option 2-2-4]

Each TRP may be configured with an index for priority.

The UE may prioritize a RACH procedure associated with the specific TRP based on the index for priority.

The specific TRP may be, for example, a TRP configured with a higher (or lower) priority index. A higher value of the priority index may indicate a higher priority, or a lower value of the priority index may indicate a higher priority.

In the present disclosure, the prioritizing of the RACH procedure associated with the specific TRP may mean that in a case where a RACH procedure with a higher priority is already ongoing and a RACH procedure with a lower priority is newly triggered in the MAC entity the UE continues the ongoing RACH procedure with the higher priority.

In the present disclosure, the prioritizing of the RACH procedure associated with the specific TRP may mean that in a case where a RACH procedure with a lower priority is already ongoing and a RACH procedure with a higher priority is newly triggered in the MAC entity the UE stops the ongoing RACH procedure with the lower priority and newly initiates the RACH procedure with the higher priority.

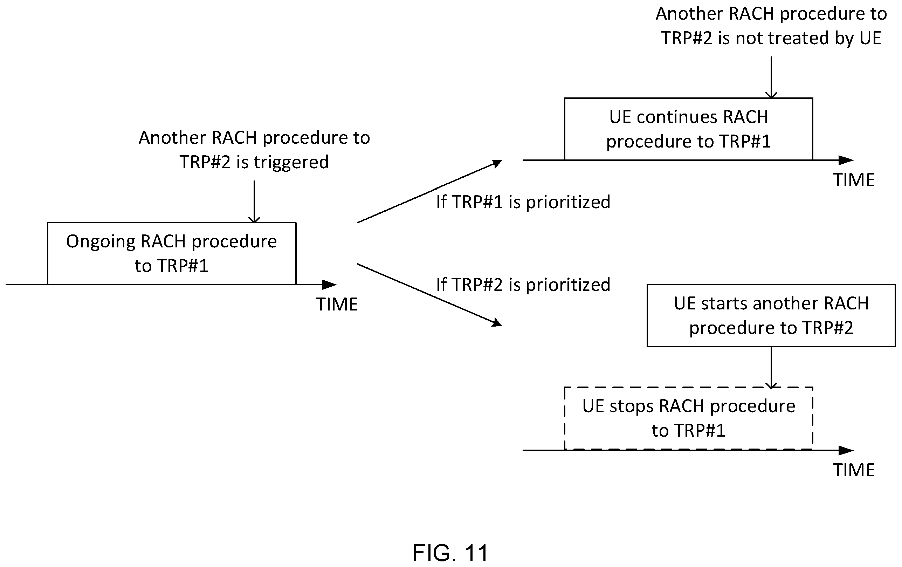

FIG. 11 is a diagram to show an example of the RACH prioritization operation in accordance with option 2-2. The example shown in FIG. 11 shows a case where the RACH procedure with respect to the first TRP (TRP #1) is ongoing, and in the middle of which procedure, another RACH procedure with respect to the second TRP (TRP #2) is triggered.

In the example shown in FIG. 11, in a case where TRP #1 is prioritized, the ongoing RACH procedure with respect to TRP #1 is maintained, and the other RACH procedure with respect to TRP #2 is not handed in the UE.

In the example shown in FIG. 11, in a case where TRP #2 is prioritized, the ongoing RACH procedure with respect to TRP #1 is stopped, and the UE newly initiates the other RACH procedure with respect to TRP #2.

As described above, even in a case where a plurality of RACH procedures are triggered, the processing of the RACH procedure can be appropriately performed according to the second embodiment.

### <Third Embodiment>

In a case where the UE wants to establish time alignment of one TRP of a cell, or the UE determines that one TRP of a cell is "non-synchronized", it is considered that the UE triggers the RACH procedure to the one TRP.

In consideration that another TRP of the cell is synchronized, it is considered that the UE requests TRP synchronization to the other TRP via another UL signal (for example, a scheduling request (SR)/MAC CE).

However, an operation for the request related to the TRP synchronization has not been sufficiently studied.

The third embodiment below describes the operation for the request related to the TRP synchronization.

A specific UL signal may be, for example, a scheduling request (SR)/MAC CE.

In a case where a specific condition is me, the UE may transmit the request to a NW.

The specific condition may be based on, for example, at least one of a (UL) synchronization status per TRP and time alignment establishment per TRP.

For example, in a case where the UE determines that (at least) one TRP of the serving cell is "non-synchronized", the UE may request UL time synchronization of the TRP by using the specific UL signal. For example, in a case where the UE determines that the time alignment establishment of (at least) one TRP of the serving cell is required, the UE may request the UL time synchronization of the TRP by using the specific UL signal.

In a case where the specific UL signal is an SR, the UE may be configured with a specific (dedicated)) SR/PUCCH resource for requesting the UL time synchronization of the TRP.

The (specific (dedicated)) SR/PUCCH resource may be configured per TRP/TAG.

In a case where the specific UL signal is a MAC CE, at least one of pieces of information below may be included in the MAC CE.
- a TRP index of a non-synchronized TRP.
- a cell index of a non-synchronized TRP.
- a TAG index of a non-synchronized TRP.

In the present disclosure, the TRP being non-synchronized may mean that the time alignment timer associated with the TRP (for example, timeAlignmentTimer) expires.

The UE, after transmitting the UL time synchronization request, may or may not receive a response signal in response to the request by using a specific DL signal (for example, PDCCH/PDSCH) .

The UE, after a specific period of time elapses after transmitting the UL time synchronization request, may assume/determine that a TRP to be targeted is to be in a "synchronized" state.

The UE, after a specific period of time elapses after receiving the response signal in response to the request, may assume /determine that the TRP to be targeted to be in the "synchronized" state.

Note that the specific period of time may be predefined in the specifications, may be transmitted to the UE as a notification through higher layer signaling (RRC/MAC CE), may be indicated to the UE in the DCI, or may be determined based on reported UE capability information.

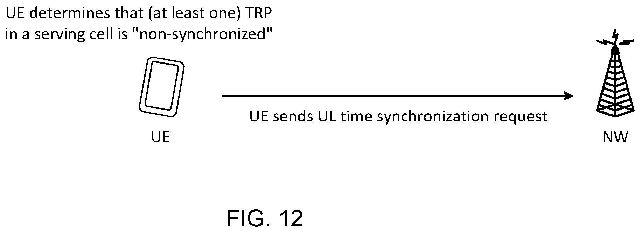

FIG. 12 is a diagram to show an example of the UL time synchronization request according to the third embodiment. In the example shown in FIG. 12, in a case of determining that (at least) one TRP the serving cell is "non-synchronized", the UE transmits the UL time synchronization request to the NW.

The third embodiment may apply only to a case described below.
- one TRP of a plurality of TRPs of the serving cell is non-synchronized, and another TRP is synchronized (that is, in a case where all of a plurality of TRPs are non-synchronized, the present embodiment does not apply to the UE and a RACH may be triggered).
- a non-synchronized TRP belongs to a specific cell (for example, SCell).
- a non-synchronized TRP belongs to a specific TAG (for example, STAG).
- (for the intra-cell multi-TRP) a non-synchronized TRP belongs to a specific cell (for example, non-serving cell (cell associated with a PCI of the non-serving cell)).

The third embodiment may apply to at least one of a case where the UE wants (needs) to establish time alignment of one TRP of a cell, a case where the UE determines that at least one TRP of a cell is "non-synchronized", and a case where the UE determines that one TRP of a cell is "synchronized" and determines that another TRP is "non-synchronized".

As described above, the UL time synchronization request with respect to the TRP non-synchronization can be appropriately transmitted according to the third embodiment.

### <Fourth Embodiment>

The fourth embodiment describes a method for determining one TRP of the serving cell, in a case where a timing advance command (TAC (for example, one TAC)) indicated in a random access response (RAR) applies to the one TRP.

The UE may receive a TAC in the RAR for the serving cell configured with the multi-TRP. In a case where two TAs for the multi-TRP are supported, the UE may apply the TAC indicated in the RAR to any of the TRPs of the serving cell.

The TRP to which the TAC indicated in the RAR is applied (for example, one TRP) may be determined based on at least one of options 4-1 to 4-3 below.

### <<Option 4-1>>

The TRP index may be associated with a specific CORESET/TCI state.

The specific CORESET/TCI state may be a CORESET/TCI state of a PDCCH scheduling the RAR.

The TAC included in the RAR may be applied to a TRP having the TRP index associated with the specific CORESET/TCI state.

Note that in the present disclosure, the PDCCH scheduling the RAR may mean a PDCCH transmitting a DCI format (DCI format 1_0) with a CRC scrambled by a corresponding RA-RNTI in a window controlled by a higher layer, which DCI format the UE attempts to detect in response to a PRACH transmission.

### <<Option 4-2>>

The TRP index may be associated with a specific TCI state.

The specific TCI state may be a TCI state of the PDSCH transmitting the RAR.

The TAC included in the RAR may be applied to a TRP having the TRP index associated with the specific TCI state.

### <<Option 4-3>>

The TRP to which the TAC is applied may be predefined in the specifications.

For example, the UE may determine to apply the TAC to a TRP associated with a specific TAG.

For example, the specific TAG may be a TAG having a lower (or higher) TAG ID.

For example, in a case where a TRP is associated with a PTAG and another TRP is associated with an STAG, the specific TAG may be the PTAG (or STAG).

The above option applied may be determined based on a type of the RACH. For example, respective different options among the above options or a common option may be applied to the RACH triggered by the PDCCH order and the RACH triggered by the UE.

In the present disclosure, the applying of the TAC to one TRP may mean applying the TAC to the TAG associated with the TRP.

For the RACH triggered by the UE, the TAC in the MAC RAR may be applied to a plurality of (two, both) TRPs. For the RACH triggered by the PDCCH order, the TAC in the MAC RAR may be applied to one TRP determined by at least one of the above options.

As described above, the TRP to which the TAC is applied can be appropriately determined according to the fourth embodiment.

### <Fifth Embodiment>

In the existing systems, in a case where the MAC entity stops UL transmission for an SCell due to the fact that a maximum UL transmission timing difference between the TAGs of the MAC entity or a maximum UL transmission timing difference between TAGs of any MAC entity of the UE is exceeded, the MAC entity determines that the time alignment timer (timeAlignmentTimer) associated with the SCell expires.

In the existing systems, in a case where the time alignment timer associated with the TAG to which the serving cell belongs is not running, and a configured grant based Small Data Transmission (CG-SDT) procedure is not ongoing, the MAC entity does not perform UL transmission except for transmissions of a random access preamble and a message A (MSG A) in the serving cell.

Such operations in the existing systems are configured per cell. However, for a plurality of (for example, two) TRPs for one cell belonging to a plurality of (for example, two) TAGs, it is considered that these operations are required to be enhanced, which has not been sufficiently studied.

The fifth embodiment below describes the enhancement of the above operations to operations related to the TA for multi-TRP and per TRP.

In a case where a first condition is met, the UE (MAC entity) may determine that the time alignment timer (for example, timeAlignmentTimer) associated with the TRP the serving cell expires.

The first condition may be, for example, the case where the MAC entity stops UL transmission for an serving cell due to the fact that at least one of the maximum UL transmission timing difference between the TAGs of the MAC entity or the maximum UL transmission timing difference between TAGs of any MAC entity of the UE is exceeded.

The above serving cell may be, for example, a PCell/PSCell/SCell.

In a case where a second condition is met, the UE (MAC entity) may determine to not perform a specific UL transmission associated with one TRP of the serving cell.

The second condition may be the case where the time alignment timer associated with the TAG to which the TRP of the serving cell belongs is not running, and the configured grant based Small Data Transmission (CG-SDT) procedure is not ongoing.

The specific UL transmission may be UL transmission except for transmissions of a random access preamble and a message (MSG A).

As described above, even in a case where the TA for multi-TRP and per TRP is used, appropriate UL transmission control can be performed by enhancing the existing specification operations according to the fifth embodiment.

### <Sixth Embodiment (Variation of First Embodiment)>

The sixth embodiment below describes an example in which the above first embodiment applies to the inter-cell mobility. Specifically, RACH resource configuration/determination method per candidate cell are described.

The UE may be configured with the inter-cell multi-TRP.

The UE may receive information related to the RACH resource corresponding to each candidate cell. Then, the UE may control the RACH procedure in each candidate cell based on the information.

The UE may determine one or more RACH resources in accordance with a specific rule/condition.

The RACH resource may be a RACH resource in a CFRA per candidate cell.

The specific rule/condition may be at least one of options 6-1 and 6-2 below.

### <<Option 6-1>>

The UE may be configured with one (common) set of (parameters for) CFRA resources in a RACH configuration (for example, rach-ConfigDedicated).

The one (common) set of (parameters for) CFRA resources may be a set (parameters) for a plurality of (for example, all) cells including the serving cell and one or more candidate cells.

The one (common) set may include at least one of, for example, a parameter indicating an SSB resource list (for example, ssb-ResourceList), a parameter indicating a PRACH mask index for random access (RA) resource selection (for example, ra-ssb-OccasionMaskIndex), a parameter indicating a CSI-RS resource list (for example, csi-rs-ResourceList), and a parameter indicating a threshold for CSI-RS (for example, rsrp-ThresholdCSI-RS).

Each of the cell indexes may be associated with at least one of the SSB, the CSI-RS, the random access preamble index (for example, ra-PreambleIndex), and the PRACH occasion.

### <<Option 6-2>>

The UE may be configured with a plurality of sets of (parameters for) CFRA resources in the RACH configuration (for example, rach-ConfigDedicated) for a plurality of candidate cells.

A parameter for CFRA may be configured per candidate cell.

The parameter for CFRA may be any parameter included in the CFRA parameters in the RACH configuration (for example, rach-ConfigDedicated). The parameter for CFRA may include, for example, at least one (or all) of a parameter indicating an RA occasion for CFRA (for example, occasions), a parameter indicating a configuration of a random access occasion for CFRA (for example, rach-ConfigGeneric), a parameter indicating the number of SSBs per RACH occasion (for example, ssb-perRACH-Occasion), a parameter indicating a CFRA resource (for example, resources), a parameter indicating an SSB resource list (for example, ssb-ResourceList), a parameter indicating a PRACH mask index for RA resource selection (for example, ra-ssb-OccasionMaskIndex), a parameter indicating a CSI-RS resource list (for example, csi-rs-ResourceList), and a parameter indicating a threshold for CSI-RS (for example, rsrp-ThresholdCSI-RS).

In the present disclosure, the candidate cell may be a cell associated with the serving cell/additional cell or a cell the same as/different from the serving cell.

In the sixth embodiment, the CFRA may be triggered for one cell. The CFRA being triggered for one cell may be at least one of, for example, the cell (including the serving cell/additional cell) being in a "non-synchronized (non-synchronized)" state, and (the CFRA) being triggered in order to establish time alignment for the cell (including the serving cell/additional cell).

In a case where the CFRA is triggered for one cell, the UE may select/determine a random access resource from among the SSB/CSI-RS/ra-PreambleIndex/PRACH occasion which are associated with the cell and provided in the RACH configuration (for example, rach-ConfigDedicated).

In the present disclosure, the cell being "non-synchronized" may mean that a time alignment timer associated with the cell (for example, timeAlignmentTimer, or timeAlignmentTimer associated with a TAG to which the cell belongs) expires.

As described above, the CFRA resource per cell in the inter-cell mobility can be appropriately determined according to the sixth embodiment.

### <Seventh Embodiment (Variation of Second Embodiment)>

The seventh embodiment below describes an example in which the above second embodiment applies to the inter-cell mobility. Specifically, an operation (enhanced function) of the UE in a case where a plurality of RACH procedures are triggered is described.

The UE may be configured with the inter-cell multi-TRP.

In the MAC entity, while a (first) RACH procedure is ongoing, a new (second) RACH procedure may be triggered. The first RACH procedure and the second RACH procedure may be respectively associated with different cells (for example, the cells including the serving cell/additional cell).

In the present disclosure, a plurality of RACH procedures being respectively associated with different cells may mean at least one of the followings.
- PDCCH orders for a plurality of RACH procedures respectively indicate different cells.
- PDCCH orders for a plurality of RACH procedures are respectively associated with different cells.
- RACH resources for a plurality of RACH procedures (for example, SSB/CSI-RS/preamble index/PRACH occasion) are respectively associated with different cells.
- a plurality of RACH procedures are triggered by "non-synchronized (non-synchronized)" states of different cells.
- a plurality of RACH procedures are triggered in order to establish time alignments for different cells.

The UE may comply with at least one of options 7-1 and 7-2 below.

### <<Option 7-1>>

The UE may determine whether to continue the first RACH procedure or to initiate the second RACH procedure.

This determination may depend on the UE implementation. In this case, the UE may determine whether to continue the first RACH procedure or to initiate the second RACH procedure based on a specific rule/condition.

### <<Option 7-2>>

The UE may prioritize a RACH procedure associated with a specific cell.

Option 7-2 is classified roughly into options 7-2-1 to 7-2-4.

### [Option 7-2-1]

The specific cell may be, for example, cell having a specific cell index.

The cell index may be, for example, the lowest (or highest) cell index.

### [Option 7-2-2]

The specific cell may be, for example, the serving cell.

The UE may prioritize a RACH procedure associated with the serving cell.

The UE may prioritize a RACH procedure for a TRP associated with the serving cell.

### [Option 7-2-3]

The specific cell may be, for example, a cell associated with a specific TAG.

The specific TAG may be, for example, a PTAG or a STAG.

The UE may prioritize a RACH procedure for a cell associated with the specific TAG.

The UE may prioritize a RACH procedure for a TRP associated with the cell associated with the specific TAG.

### [Option 7-2-4]

Each cell may be configured with an index for priority.

The UE may prioritize a RACH procedure associated with the specific cell based on the index for priority.

The specific cell may be, for example, a cell configured with a higher (or lower) priority index. A higher value of the priority index may indicate a higher priority, or a lower value of the priority index may indicate a higher priority.

In the present disclosure, the prioritizing of the RACH procedure associated with the specific cell may mean that in a case where a RACH procedure with a higher priority is already ongoing and a RACH procedure with a lower priority is newly triggered in the MAC entity the UE continues the ongoing RACH procedure with the higher priority.

In the present disclosure, the prioritizing of the RACH procedure associated with the specific cell may mean that in a case where a RACH procedure with a lower priority is already ongoing and a RACH procedure with a higher priority is newly triggered in the MAC entity the UE stops the ongoing RACH procedure with the lower priority and newly initiates the RACH procedure with the higher priority.

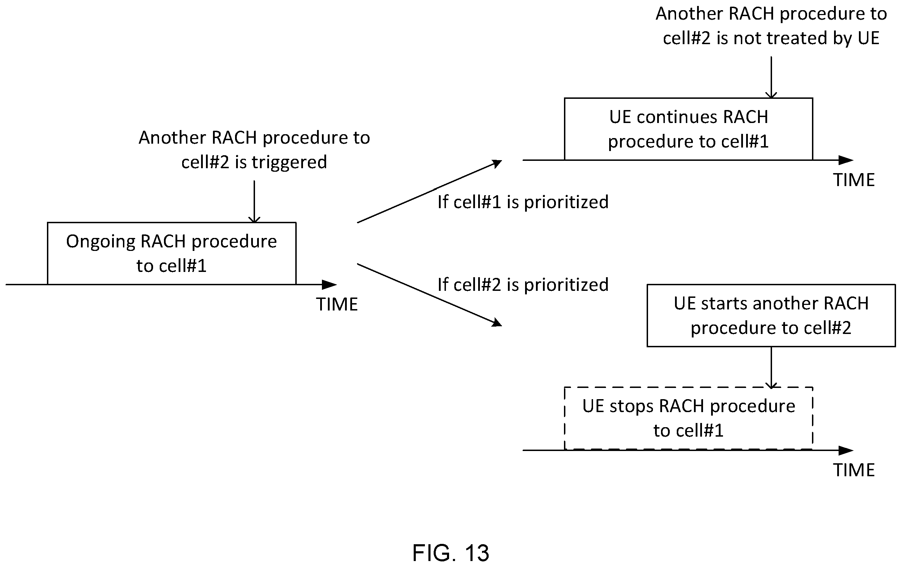

FIG. 13 is a diagram to show an example of the RACH prioritization operation in accordance with option 7-2. The example shown in FIG. 13 shows a case where the RACH procedure with respect to a first cell (cell #1) is ongoing, and in the middle of which procedure, another RACH procedure with respect to a second cell (cell #2) is triggered.

In the example shown in FIG. 13, in a case where cell #1 is prioritized, the ongoing RACH procedure with respect to cell #1 is maintained, and the other RACH procedure with respect to cell #2 is not handed in the UE.

In the example shown in FIG. 13, in a case where cell #2 is prioritized, the ongoing RACH procedure with respect to cell #1 is stopped, and the UE newly initiates the other RACH procedure with respect to cell #2.

As described above, even in a case where a plurality of RACH procedures are triggered, the processing of the RACH procedure can be appropriately performed according to the seventh embodiment.

### <Eighth Embodiment (Variation of Third Embodiment)>

The eighth embodiment below describes an example in which the above third embodiment applies to the inter-cell mobility. Specifically, an operation related to a request for synchronization of a cell (for example, a cell including the serving cell/additional cell)

The UE may be configured with the inter-cell multi-TRP.

The UE may request from the NW (for example, the base station) UL time synchronization of a cell (for example, a cell including the serving cell/additional cell) by using a specific UL signal.

In a case where a specific condition is met, the UE may request from a network (NW, for example, the base station) the UL time synchronization of the TRP by using the specific UL signal.

The case where the specific condition is may be based on, for example, at least one of a (UL) synchronization status per TRP and time alignment establishment per TRP.

For example, in a case where the UE determines that one TRP of the cell is "non-synchronized", the UE may request the UL time synchronization of the TRP by using the specific UL signal. For example, in a case where the UE determines that the time alignment establishment of one TRP of the cell is required, the UE may request the UL time synchronization of the TRP by using the specific UL signal.

A specific UL signal may be, for example, a scheduling request (SR)/MAC CE.

In a case where a specific condition is me, the UE may transmit the request to a NW.

The specific condition may be based on, for example, at least one of a (UL) synchronization status per cell and time alignment establishment per cell.

The specific condition may be, for example, (the synchronization status of) the cell being "non-synchronized".

For example, in a case where the UE determines that the cell is "non-synchronized", the UE may request the UL time synchronization of the cell by using the specific UL signal.

In a case where the specific UL signal is an SR, the UE may be configured with a specific (dedicated)) SR/PUCCH resource for requesting the UL time synchronization of the cell.

The (specific (dedicated)) SR/PUCCH resource may be configured per cell/TAG.

In a case where the specific UL signal is a MAC CE, at least one of pieces of information below may be included in the MAC CE.
- a cell index of a non-synchronized cell.
- a TAG index associated with a non-synchronized cell.

In the present disclosure, the cell being non-synchronized may mean that the time alignment timer associated with the cell or a time alignment timer associated with the TAG of the cell (for example, timeAlignmentTimer) expires.

The UE, after transmitting the UL time synchronization request, may or may not receive a response signal in response to the request by using a specific DL signal (for example, PDCCH/PDSCH) .

The UE, after a specific period of time elapses after transmitting the UL time synchronization request, may assume/determine that a TRP to be targeted is to be in a "synchronized" state.

The UE, after a specific period of time elapses after receiving the response signal in response to the request, may assume /determine that the TRP to be targeted to be in the "synchronized" state.

Note that the specific period of time may be predefined in the specifications, may be transmitted to the UE as a notification through higher layer signaling (RRC/MAC CE), may be indicated to the UE in the DCI, or may be determined based on reported UE capability information.

The eighth embodiment may apply only to a case where the non-synchronized cell is the specific cell (for example, the non-serving cell).

As described above, the UL time synchronization request with respect to the cell non-synchronization in the inter-cell mobility can be appropriately transmitted according to the eighth embodiment.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- specific processing/operation/control/information according to at least one of the above-described embodiments are supported.
- a plurality of (for example, two) TAs for multi-TRP are supported.
- a plurality of (for example, two) TAs for intra-cell multi-TRP (intra-cell M-TRP) are supported.
- a plurality of (for example, two) TAs for inter-cell multi-TRP (inter-cell M-TRP) are supported.
- L1/L2 inter-cell mobility is supported.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating a plurality of TAs for multi-TRP are enabled, information indicating that a plurality of TAs for intra-cell multi-TRP are enabled, information indicating that a plurality of TAs for inter-cell multi-TRP are enabled, information indicating that the L1/L2 inter-cell mobility is enable, any RRC parameter for a specific release (for example, Rel. 18/19), or the like.

When the UE does not support at least one of the specific UE capabilities above or is not configured with the specific information, operation of Rel. 15/16 may be applied, for example.

### (Supplementary Notes A)

Regarding one embodiment of the present disclosure, the following supplementary notes of the invention will be given.

### [Supplementary Note A-1]

A terminal including:
a receiving section that receives first information related to a Contention Free Random Access (CFRA) resource corresponding to a first transmission/reception point (TRP) and second information related to a CFRA resource corresponding to a second TRP; and
a control section that controls a CFRA procedure on the first TRP based on the first information, and controls a CFRA procedure on the second TRP, based on the second information.

### [Supplementary Note A-2]

The terminal according to supplementary note A-1, wherein the first information and the second information are common information.

### [Supplementary Note A-3]

The terminal according to supplementary note A-1 or A-2, wherein the first information and the second information are separate pieces of information respectively associated with separate TRPs.

### [Supplementary Note A-4]

The terminal according to any one of supplementary notes A-1 to A-3 1, wherein
the first information corresponds to a first cell and the second information corresponds to a second cell, and
the control section controls a CFRA procedure on inter-cell multi-TRP.

### (Supplementary Notes B)

Regarding one embodiment of the present disclosure, the following supplementary notes of the invention will be given.

### [Supplementary Note B-1]

A terminal including:
a receiving section that receives, when a first random access channel (RACH) procedure corresponding to a first transmission/reception point (TRP) is configured, a configuration related to a second RACH procedure corresponding to a second TRP; and
a control section that determines, based on a specific condition, to maintain the first RACH procedure, or to stop the first RACH procedure and initiate the second RACH procedure.

### [Supplementary Note B-2]

The terminal according to supplementary note B-1, wherein the control section determines, based on an ID for a specific TRP, to maintain the first RACH procedure, or to stop the first RACH procedure and initiate the second RACH procedure.

### [Supplementary Note B-3]

The terminal according to supplementary note B-1 or B-2, wherein the control section determines, based on a TRP associated with a specific physical cell ID, to maintain the first RACH procedure, or to stop the first RACH procedure and initiate the second RACH procedure.

### [Supplementary Note B-4]

The terminal according to any one of supplementary notes B-1 or B-3, wherein the control section determines, based on a TRP associated with a specific timing advance group, to maintain the first RACH procedure, or to stop the first RACH procedure and initiate the second RACH procedure.

### (Supplementary Notes C)

Regarding one embodiment of the present disclosure, the following supplementary notes of the invention will be given.

### [Supplementary Note C-1]

A terminal including:
a transmitting section that transmits a UL time synchronization request related to a transmission/reception point (TRP) by using a specific uplink (UL) signal, based on at least one of a synchronization status per the TRP and time alignment establishment per the TRP; and
a control section that determines that a plurality of TRPs are synchronized after a specific period of time elapses after transmitting the UL signal.

### [Supplementary Note C-2]

The terminal according to supplementary note C-1, wherein
the specific UL signal is a scheduling request, and
the control section determines a resource for the scheduling request per the TRP or per a timing advance group.

### [Supplementary Note C-3]

The terminal according to supplementary note C-1 or C-2, wherein
the specific UL signal is a Medium Access Control (MAC) control element, and
the MAC control element includes at least one of an index related to TRP of a non-synchronized TRP, a cell index of the non-synchronized TRP, and a timing advance group index of the non-synchronized TRP.

### [Supplementary Note C-4]

The terminal according to any one of supplementary notes C-1 to C-3, wherein
the control section further controls reception of a timing advance command (TAC) included in a random access response (RAR), and
the control section determines a TRP to which the TAC is applied based on at least one of a control resource set or a Transmission Configuration Indication (TCI) state associated with a physical downlink control channel scheduling the TAC, a TCI state of a physical downlink shared channel transmitting the RAR, and a specific timing advance group.

### (Supplementary Notes D)

Regarding one embodiment of the present disclosure, the following supplementary notes of the invention will be given.

### [Supplementary Note D-1]

A terminal including:
a receiving section that receives a configuration of inter-cell multi-transmission/reception points (TRPs), and receives first information related to a Contention Free Random Access (CFRA) resource corresponding to a first candidate cell and second information related to a CFRA resource corresponding to a second candidate cell; and
a control section that controls a CFRA procedure in the first candidate cell, based on the first information, and controls a CFRA procedure in the second candidate cell, based on the second information.

### [Supplementary Note D-2]

The terminal according to supplementary note D-1, wherein the first information and the second information are common information, or separate pieces of information respectively associated with separate candidate cells.

### [Supplementary Note D-3]

The terminal according to supplementary note D-1 or D-2, wherein the receiving section further receives, when a first random access channel (RACH) procedure corresponding to the first TRP is configured, a configuration related to a second RACH procedure corresponding to the second TRP, and
the control section further determines, based on a specific condition, to maintain the first RACH procedure, or to stop the first RACH procedure and initiate the second RACH procedure.

### [Supplementary Note D-4]

The terminal according to any one of supplementary notes D-1 to D-3, wherein the control section controls transmission of a UL time synchronization request related to a cell, based on a synchronization status of the cell.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

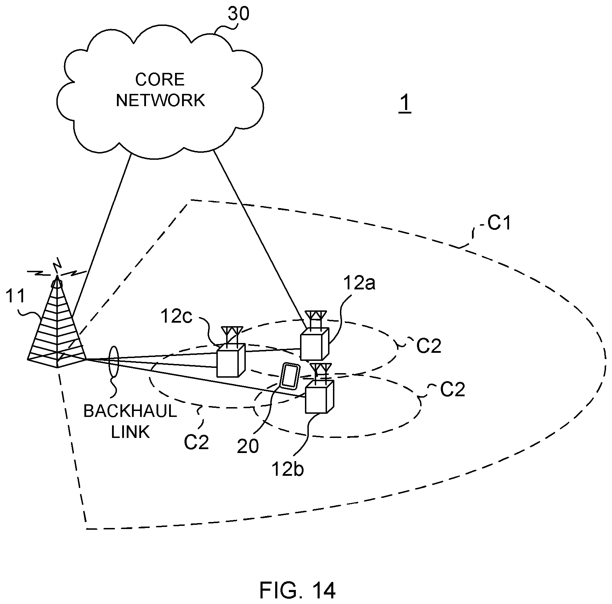

FIG. 14 is a diagram to show an example of a schematic structure of the radio communication system according to one embodiment. The radio communication system 1 (which may be referred to simply as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band of higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and operation, administration and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (Sounding Reference Signal (SRS)), a demodulation reference signal (DMRS), and the like may be communicated as an uplink reference signal (UL-RS). Note that DMRS may be referred to as a "user terminal specific reference signal (UE-specific Reference Signal)."

### (Base Station)

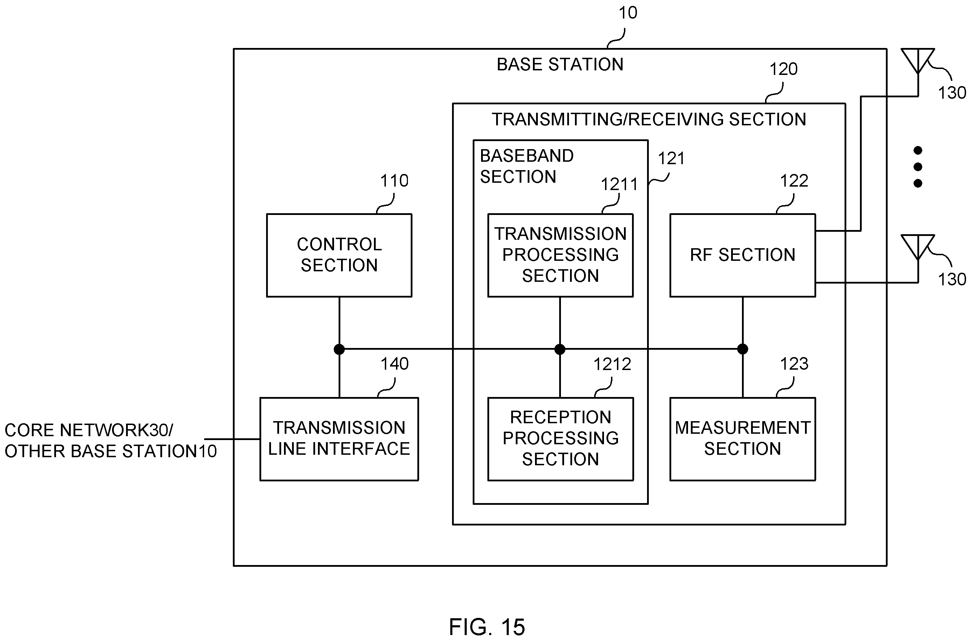

FIG. 15 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus (for example, a network node that provides an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit first information related to a Contention Free Random Access (CFRA) resource corresponding to a first transmission/reception point (TRP) and second information related to a CFRA resource corresponding to a second TRP. The control section 110 may indicate a CFRA procedure on the first TRP by using the first information, and indicate a CFRA procedure on the second TRP by using the second information (first embodiment).

The transmitting/receiving section 120 may transmit, when a first random access channel (RACH) procedure corresponding to a first transmission/reception point (TRP) is configured, a configuration related to a second RACH procedure corresponding to a second TRP. The control section 110 may indicate, by using a specific condition, that the first RACH procedure is maintained, or that the first RACH procedure is stopped and the second RACH procedure is initiated (second embodiment).

The transmitting/receiving section 120 may receive a UL time synchronization request related to a transmission/reception point (TRP) by using a specific uplink (UL) signal transmitted based on at least one of a synchronization status per the TRP and time alignment establishment per the TRP. The control section 110 may control to perform synchronization of a plurality of TRPs after a specific period of time elapses after receiving the UL signal (third embodiment).

The transmitting/receiving section 120 may transmit a configuration of inter-cell multi-transmission/reception points (TRPs), and transmit first information related to a Contention Free Random Access (CFRA) resource corresponding to a first candidate cell and second information related to a CFRA resource corresponding to a second candidate cell. The control section 110 may indicate a CFRA procedure in the first candidate cell by using the first information, and indicate a CFRA procedure in the second candidate cell by using the second information (sixth embodiment).

### (User Terminal)

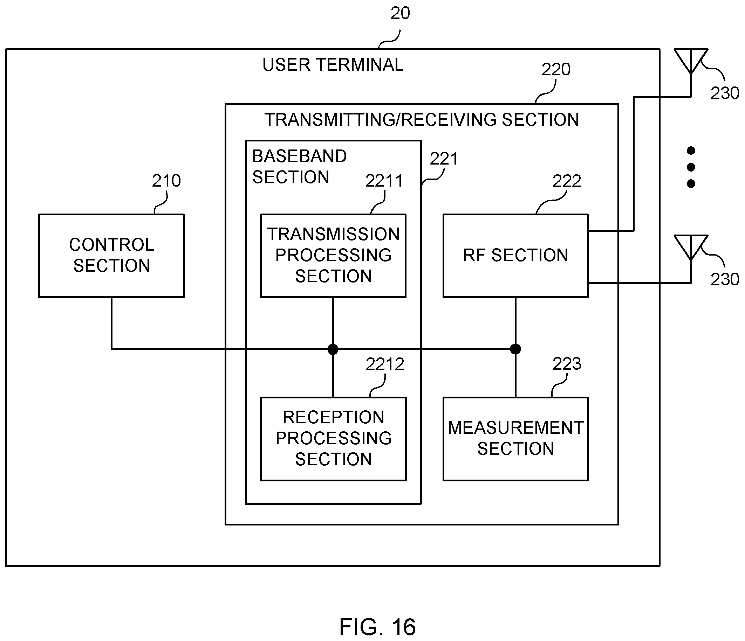

FIG. 16 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive first information related to a Contention Free Random Access (CFRA) resource corresponding to a first transmission/reception point (TRP) and second information related to a CFRA resource corresponding to a second TRP. The control section 210 may control a CFRA procedure on the first TRP based on the first information, and control a CFRA procedure on the second TRP, based on the second information (first embodiment).

The first information and the second information may be common information (first embodiment).

The first information and the second information may be separate pieces of information respectively associated with separate TRPs (first embodiment).

The first information may correspond to a first cell and the second information may correspond to a second cell. The control section 210 may control a CFRA procedure on inter-cell multi-TRP (first embodiment).

The transmitting/receiving section 220 may receive, when a first random access channel (RACH) procedure corresponding to a first transmission/reception point (TRP) is configured, a configuration related to a second RACH procedure corresponding to a second TRP. The control section 210 may determine, based on a specific condition, to maintain the first RACH procedure, or to stop the first RACH procedure and initiate the second RACH procedure (second embodiment).

The control section 210 may determine, based on an ID for a specific TRP, to maintain the first RACH procedure, or to stop the first RACH procedure and initiate the second RACH procedure (second embodiment).

The control section 210 may determine, based on a TRP associated with a specific physical cell ID, to maintain the first RACH procedure, or to stop the first RACH procedure and initiate the second RACH procedure (second embodiment).

The control section 210 may determine, based on a TRP associated with a specific timing advance group, to maintain the first RACH procedure, or to stop the first RACH procedure and initiate the second RACH procedure (second embodiment).

The transmitting/receiving section 220 may transmit a UL time synchronization request related to a transmission/reception point (TRP) by using a specific uplink (UL) signal, based on at least one of a synchronization status per the TRP and time alignment establishment per the TRP. The control section 210 may determine that a plurality of TRPs are synchronized after a specific period of time elapses after transmitting the UL signal (third embodiment).

The specific UL signal may be a scheduling request, and the control section 210 may determine a resource for the scheduling request per the TRP or per the timing advance group (third embodiment).

The specific UL signal may be a Medium Access Control (MAC) control element, and the MAC control element may include at least one of an index related to TRP of a non-synchronized TRP, a cell index of the non-synchronized TRP, and a timing advance group index of the non-synchronized TRP (third embodiment).

The control section 210 may further control reception of a timing advance command (TAC) included in a random access response (RAR). The control section 210 may determine a TRP to which the TAC is applied based on at least one of a control resource set or a Transmission Configuration Indication (TCI) state associated with a physical downlink control channel scheduling the TAC, a TCI state of a physical downlink shared channel transmitting the RAR, and a specific timing advance group (fourth embodiment).

The transmitting/receiving section 220 may receive a configuration of inter-cell multi-transmission/reception points (TRPs), and receive first information related to a Contention Free Random Access (CFRA) resource corresponding to a first candidate cell and second information related to a CFRA resource corresponding to a second candidate cell. The control section 210 may control a CFRA procedure in the first candidate cell, based on the first information, and control a CFRA procedure in the second candidate cell, based on the second information (sixth embodiment).

The first information and the second information may be common information, or separate pieces of information respectively associated with separate candidate cells (sixth embodiment).

The transmitting/receiving section 220 may further receive, when a first random access channel (RACH) procedure corresponding to the first TRP is configured, a configuration related to a second RACH procedure corresponding to the second TRP. The control section 210 may further determine, based on a specific condition, to maintain the first RACH procedure, or to stop the first RACH procedure and initiate the second RACH procedure (seventh embodiment).

The control section 210 may control transmission of a UL time synchronization request related to a cell, based on a synchronization status of the cell (eighth embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

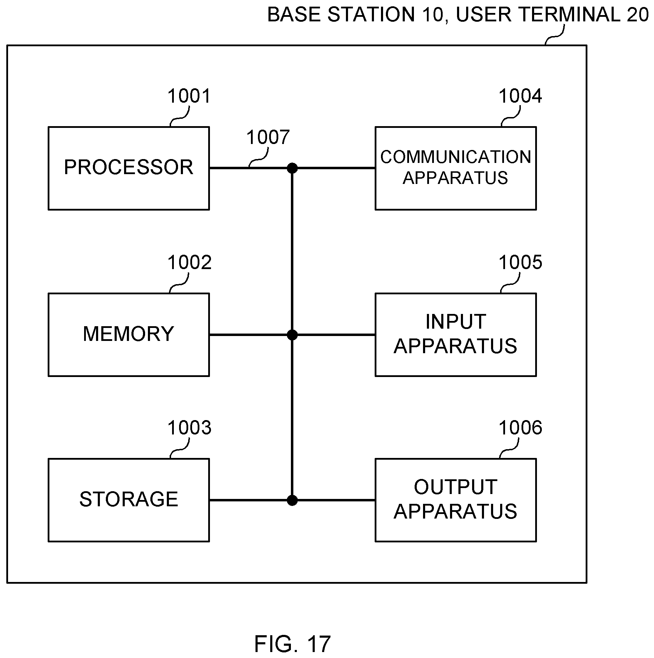

For example, a base station, a user terminal, and so on according to one embodiment of the present disclosure may function as a computer that executes the processes of the radio communication method of the present disclosure. FIG. 17 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

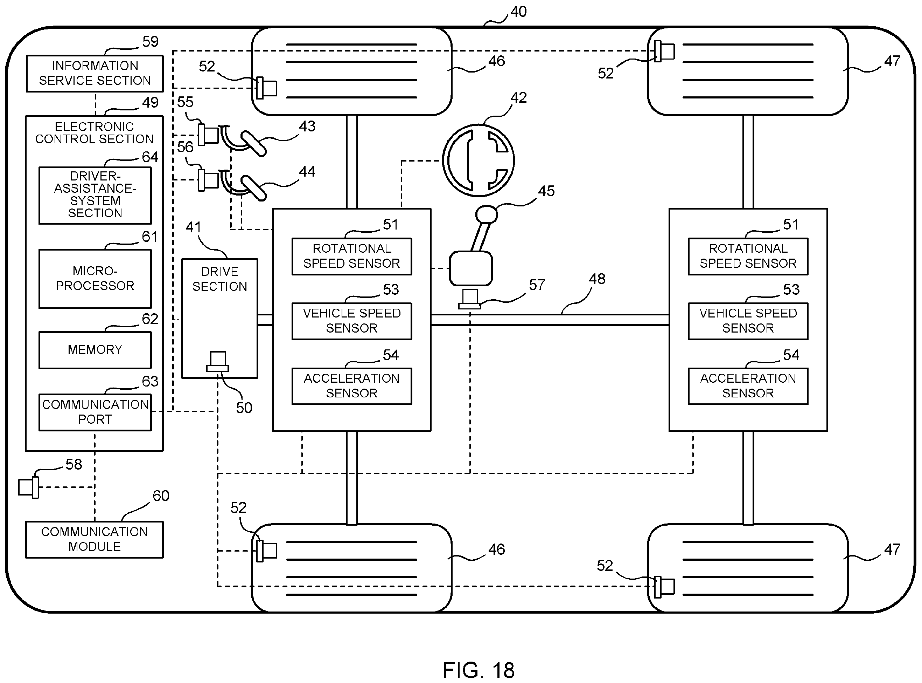

FIG. 18 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a transmitting section that transmits a UL time synchronization request related to a transmission/reception point (TRP) by using a specific uplink (UL) signal, based on at least one of a synchronization status per the TRP and time alignment establishment per the TRP; and
a control section that determines that a plurality of TRPs are synchronized after a specific period of time elapses after transmitting the UL signal.

2. The terminal according to claim 1, wherein
the specific UL signal is a scheduling request, and
the control section determines a resource for the scheduling request per the TRP or per a timing advance group.

3. The terminal according to claim 1, wherein
the specific UL signal is a Medium Access Control (MAC) control element, and
the MAC control element includes at least one of an index related to TRP of a non-synchronized TRP, a cell index of the non-synchronized TRP, and a timing advance group index of the non-synchronized TRP.

4. The terminal according to claim 1, wherein
the control section further controls reception of a timing advance command (TAC) included in a random access response (RAR), and
the control section determines a TRP to which the TAC is applied based on at least one of a control resource set or a Transmission Configuration Indication (TCI) state associated with a physical downlink control channel scheduling the TAC, a TCI state of a physical downlink shared channel transmitting the RAR, and a specific timing advance group.

5. A radio communication method for a terminal, the radio communication method comprising:
transmitting a UL time synchronization request related to a transmission/reception point (TRP) by using a specific uplink (UL) signal, based on at least one of a synchronization status per the TRP and time alignment establishment per the TRP; and
determining that a plurality of TRPs are synchronized after a specific period of time elapses after transmitting the UL signal.

6. A base station comprising:
a receiving section that receive a UL time synchronization request related to a transmission/reception point (TRP) by using a specific uplink (UL) signal transmitted based on at least one of a synchronization status per the TRP and time alignment establishment per the TRP; and
a control section that controls to perform synchronization of a plurality of TRPs after a specific period of time elapses after receiving the UL signal.
